# EUROPÄISCHE PATENTSCHRIFT

(11) **EP 3 076 013 B1**
(45) Veröffentlichungstag und Bekanntmachung des Hinweises auf die Patenterteilung: **06.11.2019**
(21) Anmeldenummer: 16161353.4
(22) Anmeldetag: 21.03.2016
(51) Int. Cl.: F03D 13/20, F03D 13/25, E02B 17/00, E02B 17/02, E04H 12/08

(54) **VERFAHREN UND VERBINDUNGSSTRUKTUR ZUR VERBINDUNG EINER GRÜNDUNGSSTRUKTUR MIT EINER TRAGSTRUKTUR EINER WINDENERGIEANLAGE UND WINDENERGIEANLAGE**
METHOD AND CONNECTING STRUCTURE FOR CONNECTING A FOUNDATION STRUCTURE WITH A SUPPORT STRUCTURE OF A WIND TURBINE AND WIND TURBINE
PROCEDE ET STRUCTURE DE LIAISON DESTINE A UNE STRUCTURE DE FONDATION COMPRENANT UNE STRUCTURE PORTEUSE D'UNE EOLIENNE ET EOLIENNE

(30) Priorität: 01.04.2015 DE 202015002455 U
(43) Veröffentlichungstag der Anmeldung: 05.10.2016
(73) Patentinhaber: Senvion GmbH, 22297 Hamburg (DE)
(72) Erfinder: SEIDEL, Marc, 49082 Osnabrück (DE)
(74) Vertreter: Wallinger Ricker Schlotter Tostmann

(56) Entgegenhaltungen:
- EP-A1- 1 318 300
- WO-A1-2005/095717
- WO-A1-2012/139881
- US-A1- 2011 138 720

## Beschreibung

Die Erfindung betrifft ein Verfahren zur Verbindung einer Gründungsstruktur mit einer Tragstruktur einer Windenergieanlage, wobei die Gründungsstruktur, die einen an ihrer Oberseite angeordneten umlaufenden Flansch aufweist, in oder auf einem festen Untergrund positioniert und befestigt wird und anschließend eine Tragstruktur auf der Gründungsstruktur positioniert und mittels einer Flanschverbindung befestigt wird. Die Erfindung betrifft ferner eine Verbindungsstruktur zur Verbindung einer Gründungsstruktur mit einer Tragstruktur einer Windenergieanlage und eine Windenergieanlage.

Die Errichtung einer Windenergieanlage erfolgt in der Praxis in mehreren Stufen. Zunächst wird eine Gründungsstruktur, also eine Art Fundament, am oder im Untergrund befestigt. Bekannt sind für Offshore-Windenergieanlagen beispielsweise sogenannte Jacket-Strukturen, die aus einem Gitterturm mit mehreren Füßen bestehen, die, gegebenenfalls nach einer Nivellierung, auf dem Meeresboden verankert werden, oder Monopiles, also Stahlrohre mit einem Durchmesser in der Größenordnung von mehreren Metern, die in den Meeresboden eingerammt werden.

Auf diese Gründungsstruktur wird dann eine Tragstruktur der Windenergieanlage aufgesetzt. Dies kann der Turm oder ein unterstes Turmsegment sein, oder auch ein Übergangsstück, ein so genanntes "Transition Piece", das zylindrisch oder konisch ausgebildet sein kann und im letzteren Fall einen Übergang zwischen dem größeren Durchmesser der Gründungsstruktur und dem kleineren Durchmesser des untersten Teils des Turms herstellt.

Bei der Errichtung von Windenergieanlagen ist eine exakte Nivellierung des Anschlusses für den Turm sehr wichtig. Dies ist besonders bei Offshore-Windenergieanlagen eine Herausforderung, da die Positionierung und Ausrichtung der Gründungsstruktur in den meisten Fällen unter Wasser erfolgen muss. Bei Jacket-Strukturen betrifft dies die Ausrichtung der Füße. Bei dem Einrammen eines Monopiles ist die exakte Ausrichtung des Monopiles nicht immer gewährleistet.

Derzeit werden verschiedene Maßnahmen zur Nivellierung eingesetzt. Bei Monopiles wird beispielsweise der so genannte "Grouted Joint" eingesetzt. Hierbei handelt es sich um eine Rohr-in-RohrVerbindung, die mit hochfestem Beton vergossen wird. Das obere äußere Rohr oberhalb der Wasseroberfläche kann vor dem Verguss senkrecht ausgerichtet werden, der Spalt zwischen innerem Monopile und äußerem oberen Rohr ist entsprechend asymmetrisch.

Zur Herstellung sicherer und belastbarer Verbindungen zwischen Gründungsstruktur und Tragstruktur sind Flanschverbindungen vorteilhaft. Das Rammen eines Monopiles mit einem oberen Flansch ist jedoch problematisch, da sich der Flansch verziehen kann. Auch sind bislang keine Lösungen für eine Korrektur der Ausrichtung der Flanschverbindungsteile in der Größenordnung bekannt, wie sie bei der Aufstellung von Windenergieanlagen verwendet werden.

US 2011/0138720 A1 beschreibt eine Verbindungsstruktur, mit der eine nivellierte Flanschverbindung eines Fundaments mit einem Turmflansch ermöglicht wird. Dazu wird ein Fundament bereitgestellt, das eine umlaufende Rinne aufweist, in der Befestigungsbolzen angeordnet sind, mit denen anschließend ein Flansch des untersten Turmsegments befestigt wird. Die Bolzen werden zunächst mit Plastikhülsen versehen, die einen flächigen Abschluss auf der Oberfläche der Rinne herstellen und die Bolzen bis zu einer oberen Höhe vor einer Vergussflüssigkeit und dem Eindringen von Wasser schützen. Anschließend wird ein flüssiger Grout-Beton eingefüllt, der selbstnivellierend ist.

Demgegenüber liegt der vorliegenden Erfindung die Aufgabe zugrunde, ein Verfahren und eine Verbindungsstruktur für eine Windenergieanlage zur Verfügung zu stellen, mit denen eine dauerhaft sichere und einfache Aufstellung von Windenergieanlagen möglich ist, sowie eine entsprechende Windenergieanlage.

Diese Aufgabe wird durch ein Verfahren zur Verbindung einer Gründungsstruktur mit einer Tragstruktur einer Windenergieanlage gelöst, wobei die Gründungsstruktur einen an ihrer Oberseite angeordneten umlaufenden Flansch aufweist, mit den Schritten:
- Positionieren und Befestigen der Gründungsstruktur in oder auf einem Untergrund,
   Verfüllen einer umlaufenden Rinne im umlaufenden Flansch der Gründungsstruktur mit einer selbstnivellierenden Vergussmasse wenigstens bis zu einer Mindestvergusstiefe,
- Positionieren einer Tragstruktur auf der Gründungsstruktur, wobei die Tragstruktur mit einem unteren umlaufenden Flanschin die Rinne auf die ausgehärtete Vergussmasse aufgesetzt wird,
- Befestigen der Tragstruktur (80) auf der Gründungsstruktur (70) mittels einer Flanschverbindung mit Verbindungselementen,
- Verspannen der Verbindungselemente, sodass die Vergussmasse (67) unter eine Vorspannung gesetzt wird,
das dadurch weitergebildet ist, dass während oder nach Herstellen der Flanschverbindung zwischen Gründungsstruktur und Tragstruktur eine Dichtung in einen oder in einem außen liegenden Spalt zwischen einer Rinnen-Innenwand und einer Außenhülle der Tragstruktur eingelegt und/oder positioniert wird.

Besonders vorteilhaft ist ein Verfahren zur Verbindung einer Gründungsstruktur mit einer Tragstruktur einer Windenergieanlage gelöst, wobei die Gründungsstruktur, die einen an ihrer Oberseite angeordneten umlaufenden Flansch aufweist, in oder auf einem festen Untergrund positioniert und befestigt wird und anschließend eine Tragstruktur auf der Gründungsstruktur positioniert und mittels einer Flanschverbindung befestigt wird, das dadurch weitergebildet ist, dass der umlaufende Flansch der Gründungsstruktur eine umlaufende Rinne aufweist, die vor der Positionierung der Tragstruktur mit einer selbstnivellierenden Vergussmasse wenigstens bis zu einer Mindestvergusstiefe verfüllt wird, die Tragstruktur mit einem unteren umlaufenden Flansch in die Rinne auf die ausgehärtete Vergussmasse aufgesetzt wird und die Flanschverbindung mit Verbindungselementen, mit denen die Vergussmasse unter eine Vorspannung gesetzt wird, hergestellt wird.

Bei der erfindungsgemäß hergestellten Verbindung sind keine weiteren Abstützungsmaßnahmen erforderlich. Die Verwendung einer selbstnivellierenden Vergussmasse sorgt allein durch den Einfluss der Schwerkraft dafür, dass die tragende Oberfläche des unteren Flansches plan waagerecht für die Tragstruktur ausgerichtet ist. Die Vergussmasse ist selbstnivellierend. Dies bedeutet, dass sie während des Vergusses eine ausreichend niedrige Viskosität aufweist, so dass sie sich so in der umlaufenden Rinne verteilen kann, dass sie eine glatte und senkrecht zur Schwerkraftsrichtung ausgerichtete Oberfläche ausbildet. So können Schiefstellungen beispielsweise von Monopiles ausgeglichen werden. Auch ein Rammen eines Monopiles, bei dem der Flansch möglicherweise verzogen wird und für eine konventionelle Flanschverbindung nicht mehr geeignet wäre, wird so ermöglicht, da die im Millimeterbereich auftretenden Verformungen des Flansches durch die Vergussmasse und die Rinne ebenfalls ausgeglichen werden. In einem solchen Fall sollten die Flanschöffnungen für die Verbindungselemente im umlaufenden Flansch der Gründungsstruktur und/oder der Tragstruktur groß genug sein, um ein so entstehendes Spiel zuzulassen.

Mechanisch ist für eine stabile Verbindung dadurch gesorgt, dass entlang des gesamten Umfangs der Rinne eine Mindestvergusstiefe eingehalten wird, die dafür sorgt, dass der obere Flansch, der das gesamte Gewicht des Turms, des Maschinenhauses und des Rotors der Windenergieanlage auf die Vergussmasse aufbringt, sich nicht durchdrückt. Die konkrete Mindesttiefe ist anhand der Eigenschaften des gewählten Gussmaterials und der auf es wirkenden Kräfte zu wählen. Vorzugsweise wird als Vergussmasse ein Gießharz verwendet. Die Mindestvergusstiefe beträgt vorzugsweise auch an einer durch eine Neigung oder Verformung des Flansches bedingten flachsten Stelle des Rinnenbodens wenigstens 20 mm, insbesondere wenigstens 30 mm.

Als Verbindungselemente, mit denen die Vergussmasse unter eine Vorspannung gesetzt werden kann, werden vorzugsweise Schraubverbindungen eingesetzt. Alternativ können Bolzen, Nieten, Stangen- oder Seilkonstruktionen verwendet werden.

Bei der Verwendung von Schrauben als Verbindungselemente wird die Vergussmasse in der Rinne durch Anziehen der Schrauben der Flanschverbindung vorgespannt bzw. und eine Vorspannung bzw. Druck, gesetzt, der die Wechsellasten im Betrieb der Windenergieanlage übersteigt. Unabhängig von den momentanen Belastungszuständen im Betrieb ist das Vergussmaterial dann immer druckbelastet, was durch das Vergussmaterial, beispielsweise Gießharz, sehr gut auf Dauer verkraftet wird. Schädliche Zugbelastungen, die das Vergussmaterial etwa durch Rissbildung schädigen würden, treten so nicht auf. Um die Standsicherheit der Anlage zu gewährleisten, ist im Laufe des Betriebs der Windenergieanlage die gegebenenfalls sinkende Restvorspannung der Schrauben regelmäßig zu überprüfen und gegebenenfalls nachzuziehen. Hierfür können rechnerisch Nachspannungsintervalle ermittelt werden.

Die Flanschstruktur, in die die Rinne mit der Vergussmasse eingebettet ist, ist mit einer Rinnenwand und einem Rinnenboden vorzugsweise so massiv oder stark zu wählen, dass Druckbelastungen, die vom Flansch der Tragstruktur ausgehen und durch die Vergussmasse nach unten und zu den Seiten hin weitergeleitet werden, aufgenommen und weitergeleitet werden, ohne den Flansch zu beschädigen. Eine starke Druckbelastung geht unter einem Winkel von 45° von den Kanten des Flansches der auf die Vergussmasse drückenden Tragstruktur aus.

Die Rinne weist vorteilhafterweise eine Form auf, die dem Querschnitt des Flanschs der Tragstruktur entspricht. In einer besonders bevorzugter Ausführungsform ist sie kreisrund.

Um die Nachbearbeitung der Vergussmasse nach dem Verguss zu erleichtern, werden vorteilhafterweise durchgängige Flanschöffnungen im umlaufenden Flansch der Gründungsstruktur mittels durch die Flanschöffnungen gesteckter Füllkörper oder Hülsen, insbesondere in der Art von Süllwänden, vor einem Eindringen von Vergussmasse in die Flanschöffnungen geschützt, wobei insbesondere die Füllkörper oder Hülsen vor der Positionierung der Tragstruktur auf dem Flansch wieder entfernt werden. Auf diese Weise ist es möglich, die am Boden der Rinne angeordneten Flanschöffnungen offen und von Vergussmasse frei zu halten, die zum Durchlass der Verbindungselemente, vorzugsweise Schrauben, bestimmt sind, mit denen die Flanschverbindung hergestellt und vorgespannt wird.

Diese Füllkörper oder Hülsen sind nach dem Aushärten oder zu einem Zeitpunkt, an dem die Vergussmasse bereits ihre Fließfähigkeit verloren hat, einfach zu entfernen. Hülsen können gegebenenfalls auch verbleiben, wenn ihr Innendurchmesser zur Durchführung der Verbindungselemente, vorzugsweise Schrauben, groß genug ist, was einen weiteren Arbeitsschritt einspart. Die Höhe der Hülsen über dem Rinnenboden sollte über eine geplante maximale Vergusstiefe hinausreichen. Eine Höhe, die der Tiefe der Rinne insgesamt entspricht, ist ausreichend.

Alternativ können auch nachträglich durch Bohren von Durchgangslöchern durch die Vergussmasse Durchgangsöffnungen für die Verbindungselemente, vorzugsweise Schrauben, hergestellt werden.

Während oder nach Herstellen der Flanschverbindung zwischen Gründungsstruktur und Tragstruktur wird erfindungsgemäß eine Dichtung in einen oder in einem außen liegenden Spalt zwischen einer Rinnen-Innenwand und einer Außenhülle der Tragstruktur eingelegt und/oder positioniert, wobei insbesondere die Rinnen-Innenwand und/oder die Außenhülle der Tragstruktur eine Form aufweisen, mittels der die Dichtung form- und/oder kraftschlüssig festgehalten wird. Vorzugsweise handelt es sich hierbei um eine volumenausdehnende Dichtung, die sich dem Spalt passgenau anpasst und somit ein Angriff an nicht vollständig abgedeckte Teile des Spalts verhindert. Die außen liegenden, also der Witterung ausgesetzten, Dichtungen schützen die Vergussmasse in der Rinne vor dem zersetzenden Einfluss der Witterung, also bei Offshore-Windenergieanlagen beispielsweise vor dem Meersalz. Die Dichtungen können gegebenenfalls in regelmäßigen Intervallen ausgetauscht werden. Sie können entweder nach der Fertigstellung der Flanschverbindung eingelegt werden oder gleich um einen unteren Teil der Tragstruktur angeordnet sein und beim Verbinden mit der Gerüststruktur bereits in den abzudichtenden Spalt eindringen.

Bei der Gründungsstruktur handelt es sich bevorzugt um einen Monopile, der in einen Untergrund, insbesondere einen Meeresboden, eingerammt wird, wobei insbesondere auf einer äußeren Schalung, insbesondere auf einer äußeren Rinnenwand, gerammt wird, oder um eine Jacket-Gründungsstruktur. Bei einer Jacket-Gründungsstruktur kann dann das aufwändige Ausrichten der Füße entfallen oder wenigstens abgekürzt werden. Auch alternative Gründungsstrukturen, wie Tripiles und Tripods, sind von der Erfindung umfasst.

Die der vorliegenden Erfindung zugrunde liegende Aufgabe wird auch durch eine Verbindungstruktur zur Verbindung einer Gründungsstruktur mit einer Tragstruktur einer Windenergieanlage mittels einer Flanschverbindung, umfassend einen umlaufenden Flansch an der Oberseite einer Gründungsstruktur, die in einem unteren Abschnitt in oder auf einem festen Untergrund befestigbar oder befestigt ist, wobei der umlaufende Flansch eine umlaufende Rinne aufweist, die mit einer selbstnivellierenden Vergussmasse, insbesondere einem Gießharz, bis zu einer Mindestvergusstiefe verfüllbar oder verfüllt ist, gelöst, die dadurch weitergebildet ist, dass ein außen liegender Spalt der Rinne mittels einer Dichtung abgedichtet ist. Diese Ausbildung einer Rinne im umlaufenden Flansch der Gründungsstruktur und deren wenigstens teilweise, aber vollständig umlaufende Verfüllung mit einer Vergussmasse erfüllt und ermöglicht alle oben zum erfindungsgemäßen Verfahren beschriebenen Vorteile und technischen Wirkungen.

Die Verbindungsstruktur umfasst weiter einen umlaufenden Flansch an einer Unterseite einer Tragstruktur der Windenergieanlage, der auf die ausgehärtete Vergussmasse in der Rinne aufsetzbar oder aufgesetzt ist, wobei mittels Verbindungselementen, vorzugsweise Schraubenverbindungen eine vorgespannte Flanschverbindung zwischen der Tragstruktur und der Gründungsstruktur herstellbar oder hergestellt ist. Dazu weist vorzugsweise die Rinne eine Breite auf, die größer ist als die Breite des Flansches der Tragstruktur.

Vorteilhafterweise weist die Rinne eine Tiefe auf, die auch bei einer Schiefstellung von bis zu 0,5°, insbesondere bis zu 1°, der Gründungsstruktur einen Verguss der Vergussmasse mit der Mindestvergusstiefe gewährleistet, wobei die Mindestvergusstiefe insbesondere 20 mm, insbesondere 30 mm, beträgt. Eine solche Mindestvergusstiefe gewährleistet an jedem Punkt der umlaufenden Rinne, dass der Flansch der Tragstruktur durch das Gewicht der Windenergieanlage nicht durch die Vergussmasse hindurch gedrückt wird.

Der umlaufende Flansch der Gründungsstruktur ist im Querschnitt vorzugsweise als nach innen oder außen überstehendes "L"-förmiges Profil oder als "T"-förmiges Profil ausgebildet ist. Besonders bevorzugt ist das nach innen überstehende "L"-Profil, da nur eine Reihe von Verbindungselemente, vorzugsweise Schrauben, notwendig ist und die Rinne im Wesentlichen im Inneren der schützenden Struktur angeordnet ist. Die Alternativen, eine "T"-Form mit einer innen liegenden Schraubenreihe und einer außen liegenden Schraubenreihe sowie eine nach außen überstehende "L"-Form des Flansches sind ebenfalls im Rahmen der Erfindung umfasst.

Erfindungsgemäß ist ein außen liegender Spalt der Rinne mittels einer Dichtung abgedichtet, wobei insbesondere eine außen liegende Oberfläche der Dichtung als schräge oder gekrümmte Ablauffläche ausgebildet ist oder eine schräge oder gekrümmte Ablauffläche, die den Spalt überdeckt, an der Tragstruktur ausgebildet ist. Die Dichtung sorgt dafür, dass die Vergussmasse in der Rinne nicht witterungsbedingt vorzeitig altert. Ablaufflächen lassen Spritz- oder Regenwasser unschädlich nach außen hin ablaufen und halten die Vergussmasse in der Rinne trocken.

In einer besonders bevorzugten Ausführungsform sind zur Verengung des Spalts zwischen aufeinander positionierter Gründungsstruktur und Tragstruktur Ausbuchtungen an mindestens einer der beiden Strukturen angeordnet. Vorzugsweise sind diese Ausbuchtungen an der Innenseite der äußeren Rinnenwand und/oder an der Außenhülle der Tragstruktur angeordnet. In einer besonders vorteilhaften Ausführungsform sind die Ausbuchtungen bis zur höchsten Höhe der Rinnenwand angeordnet, um so ein Verrutschen einer Dichtung zu verhindern und die form- und kraftschlüssige Dichtungsverbindung sicherer zu machen.

Im Rahmen der Erfindung ist es bevorzugt, wenn die Gründungsstruktur ein Monopile oder eine Jacket-Gründungsstruktur ist, wobei die Tragstruktur ein Übergangsstück, ein Turmsegment oder ein Turm einer Windenergieanlage ist.

In einer weiterhin bevorzugten Ausführungsform kann die Verbindungsstruktur auch zwischen Übergangsstück und einem Turmsegment oder einem Turm einer Windenergieanlage eingesetzt werden.

Ebenfalls ist es im Rahmen der Erfindung umfasst, dass beispielsweise ein Übergangsstück ohne erfindungsgemäße Nivellierungsrinne auf die Gründungsstruktur gesetzt wird und selbst an seiner Oberseite einen Flansch mit der erfindungsgemäßen Rinne aufweist, in die gemäß dem erfindungsgemäßen Verfahren eine selbstnivellierende Vergussmasse eingebracht wird, nach deren Aushärten dann das unterste Turmsegment oder der Turm aufgesetzt wird und eine Flanschverbindung hergestellt wird. In diesem Fall ist das Übergangsstück im Rahmen der vorliegenden Erfindung ein Teil der Gründungsstruktur, während das unterste Turmsegment oder der Turm die Tragstruktur darstellt. Dieser Fall ist besonders im Falle nicht gerammter Strukturen vorteilhaft, da eine Flanschverbindung beispielsweise zwischen einem Übergangsstück und einer Jacket-Struktur möglich ist und die erfindungsgemäße Flanschverbindung mit Rinne und Vergussmasse wegen ihrer Anordnung an der Oberseite des Übergangsstücks weiter von der Wasseroberfläche entfernt und somit weniger witterungs- bzw. spritzwassergefährdet ist.

Weiterhin bevorzugt ist eine Ausführungsform mit einer Verbindungsstruktur, dadurch gekennzeichnet, dass die Gründungsstruktur ein Monopile ist und über Kraftaufbringung auf eine äußere Rinnenwand in einen festen Untergrund bzw. Meeresboden eingerammt wird. Vorteilhaft wird so erreicht, dass sich nicht die Flanschfläche der Gründungsstruktur durch das Rammen verzieht und/oder Beulen aufweist, sondern nur die äußere Rinnenwand. Da diese lediglich dafür sorgt, dass die selbstnivellierende Vergussmasse nicht auslaufen kann, sind Verformungen der Rinnenwand unbedenklich.

Die erfindungsgemäße Verbindungsstruktur ist weiterhin für Retrofitmaßnahmen sehr gut geeignet. Sollte die Gründungsstruktur während des Anlagenbetriebs über die Lebensdauer weiter einsinken, ist es um ein Vielfaches leichter, die Ausrichtung der Tragstruktur auf der Gründungsstruktur anzupassen als die Gründung selbst neu und haltbar zu justieren. Insbesondere für Retrofitmaßnahmen ist daher der Einsatz der Verbindungsstruktur zwischen Übergangsstück und Turmsegment oder Turm besonders vorteilhaft.

Es ist also erfindungsgemäß äquivalent auch umfasst, dass die erfindungsgemäße Verbindungsstruktur zur Verbindung eines Übergangsstücks mit einem Turmsegment oder Turm einer Windenergieanlage mittels einer Flanschverbindung, umfassend einen umlaufenden Flansch an der Oberseite des Übergangsstücks, das auf einer Gründungsstruktur befestigbar oder befestigt ist, dadurch gekennzeichnet, dass der umlaufende Flansch eine umlaufende Rinne aufweist, die mit einer selbstnivellierenden Vergussmasse, insbesondere einem Gießharz, bis zu einer Mindestvergusstiefe verfüllbar oder verfüllt ist. Entsprechendes gilt auch für das erfindungsgemäße Verfahren.

Die der Erfindung zugrunde liegende Aufgabe wird ebenfalls gelöst durch eine Windenergieanlage mit einer Gründungsstruktur, einer Tragstruktur und einer zuvor beschriebenen erfindungsgemäßen Verbindungsstruktur.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer erfindungsgemäßen Windenergieanlage,
- Fig. 2: eine schematische Darstellung einer erfindungsgemäß verwendbaren Gründungsstruktur für eine Windenergieanlage,
- Fig. 3: eine schematische Querschnittsdarstellung durch eine erfindungsgemäße Verbindungsstruktur und
- Fig. 4: eine schematische Querschnittsdarstellung durch eine weitere erfindungsgemäße Verbindungsstruktur.

In den Zeichnungen sind jeweils gleiche oder gleichartige Elemente und/oder Teile mit denselben Bezugsziffern versehen, so dass von einer erneuten Vorstellung jeweils abgesehen wird.

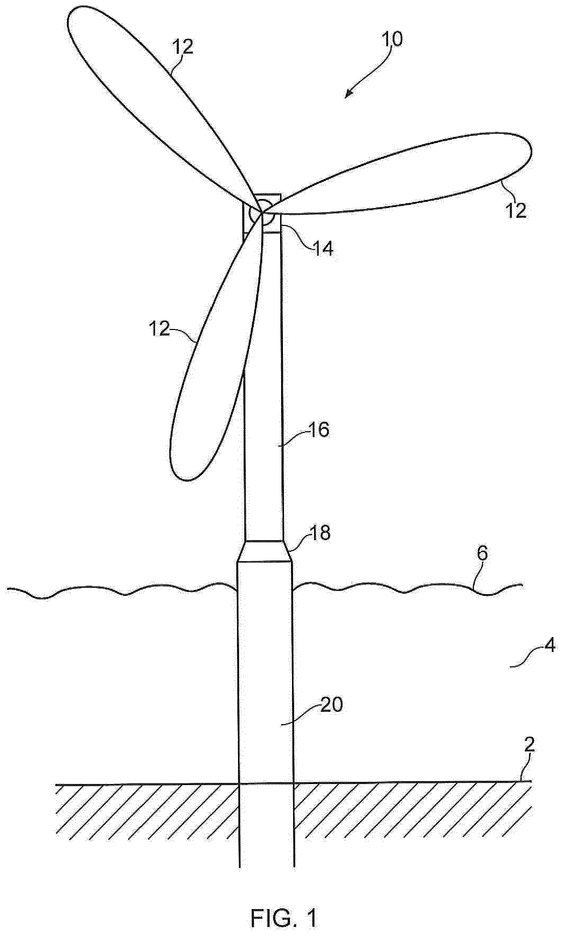

Fig. 1 zeigt schematisch eine Offshore-Windenergieanlage 10 mit einem an einem Maschinenhaus 14 angeordneten Rotor mit drei Rotorblättern 12. Das Maschinenhaus 14 ist auf einem Turm 16 drehbar angeordnet. Der Turm 16 ist über ein konisches Übergangsstück 18 mit einer als Monopile 20 ausgebildeten Gründungsstruktur verbunden, die in den Meeresboden 2 hineingerammt ist. Monopile 20, Übergangsstück 18 und Turm 16 haben Durchmesser von jeweils mehreren Metern, beispielsweise zwischen 4 und 8 m. Das obere Ende des Monopile 20 mit dem Übergangsstück 18 ist oberhalb der Wasseroberfläche 6 des Meeres 4 angeordnet.

Der Monopile 20 kann nach dem Einrammen in den Meeresboden 2 etwas schief stehen, beispielsweise mit einer Schrägstellung von bis zu ca. 0,5° oder etwas mehr. Bei einem Durchmesser des Monopile 20 von beispielsweise ca. 5 m bedeutet eine Schiefstellung von beispielsweise 0,5° einen Höhenunterschied zwischen der höchsten und der tiefsten Position des Flansches von ca. 43 mm, den es auszugleichen gilt.

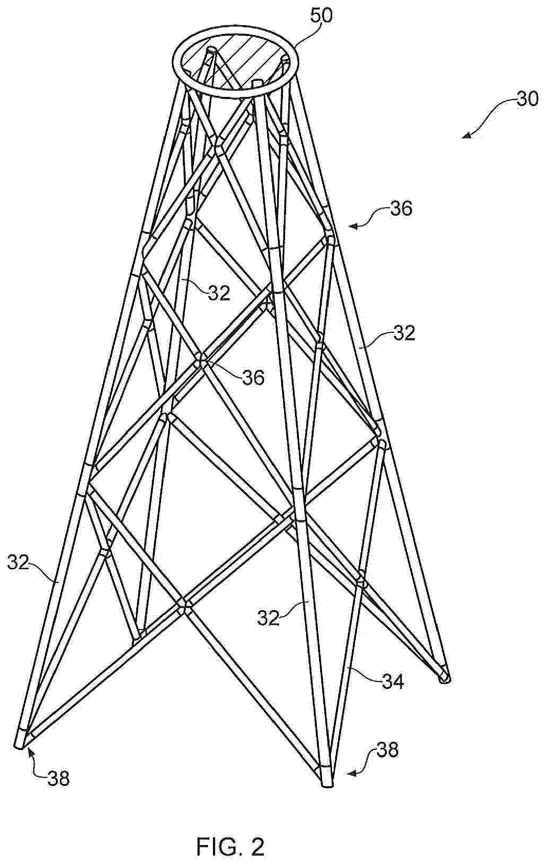

In Fig. 2 ist eine alternative Gründungsstruktur in Form einer Jacket-Struktur 30 gezeigt, die aus einer gitterförmigen Rohrkonstruktion zusammengeschweißt ist mit Eckrohren 32, rohrförmigen Querstreben 34, die an Kreuzungs- und Verbindungspunkten 36 miteinander verschweißt sind, sowie Füßen 38, die auf dem Untergrund aufsetzen. Auf der Oberseite ist schematisch ein umlaufender Flansch 50 der Jacket-Struktur 30 gezeigt, auf den ein Übergangsstück oder ein Turmsegment aufzusetzen ist. Der Flansch 50 ist bei Offshore-Windenergieanlagen oberhalb der Wasseroberfläche angeordnet.

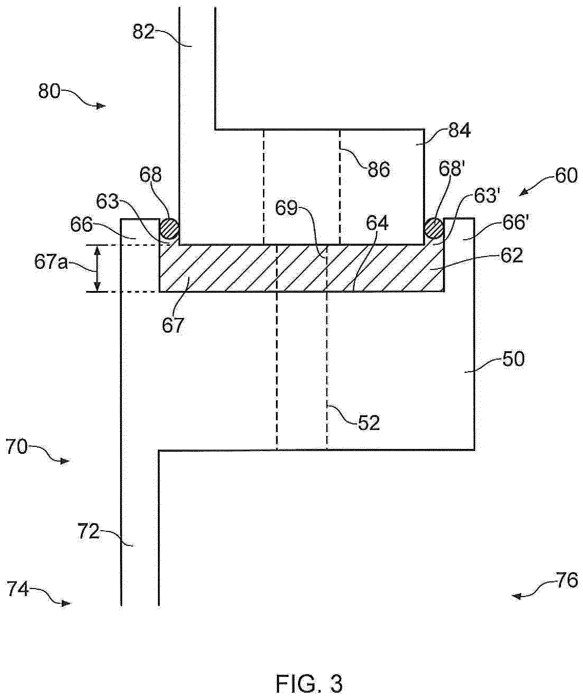

In Fig. 3 ist ein erstes Ausführungsbeispiel einer erfindungsgemäßen Verbindungsstruktur 60 schematisch im Querschnitt dargestellt. Sie umfasst zuunterst einen Flansch 50 einer Gründungsstruktur 70, die beispielsweise, aber nicht ausschließlich, als Monopile 20 oder als Jacket-Struktur 30 gemäß Figuren 1 oder 2 ausgebildet sein kann und zuoberst einen Flansch 84 einer Tragstruktur 80, die beispielsweise, aber nicht ausschließlich, als Übergangsstück 18, unterstes Segment eines Turms 16 oder Turm 16 ausgebildet sein kann. Der dargestellte Teil der Gründungsstruktur 70 kann auch ein Übergangsstück 18 sein. In dem Fall ist die Tragstruktur 80 ein Turm 16 oder ein unterstes Segment eines Turms 16.

Der Flansch 50 der Gründungsstruktur 70 ist in diesem Ausführungsbeispiel als "L"-förmiger Flansch ausgebildet, der von der Außenhülle 72 der Gründungsstruktur 70 nach innen, also zum Zentrum der Gründungsstruktur 70 hin, ausgerichtet ist, wie an den Pfeilen, die die Außenseite 74 und die Innenseite 76 der Struktur kennzeichnen, zu erkennen ist. An seiner Oberseite weist der Flansch 50 der Gründungsstruktur 70 eine umlaufende Rinne 62 auf, die mit einer ausgehärteten Vergussmasse 67 bis zu einer Füllhohe 67a aufgefüllt ist. Durch die Schwerkraft hat sich die beim Vergießen noch flüssige Vergussmasse nivelliert. An verschiedenen Orten entlang des Umfangs der Rinne ist die Füllhöhe 67a daher verschieden, wenn der Flansch 50 nicht genau waagerecht angeordnet ist. Die Füllhöhe 67a ist so gewählt, dass an keinem Punkt in der Rinne in Umfangsrichtung eine vorbestimmte Mindestvergusstiefe unterschritten wird.

Auf die Oberfläche der Vergussmasse 67 ist in die Rinne 62 ein Flansch 84 der Tragstruktur 80 aufgesetzt, der ebenfalls zusammen mit der Außenhülle 82 der Tragstruktur 80 als nach innen ausgerichteter "L"-förmiger Flansch ausgebildet ist. Die Breite des Flansches 84 ist kleiner als die Breite der Rinne 62, so dass ein seitliches Spiel gegeben ist. Mit den durchgängigen Flanschöffnungen 52 des unteren Flansches 50 fluchtend weist der obere Flansch 84 ebenfalls durchgängige Flanschöffnungen 86 auf. Um gegebenenfalls beim Rammen entstandene Verzerrungen auszugleichen, haben die oberen Flanschöffnungen 86 einen vergrößerten Durchmesser, um auch nach dem Rammen eine Flucht der Flanschöffnungen 52 und 86 zueinander zu gewährleisten. Eine Durchgangsbohrung bzw. Durchgangsöffnung 69 durch die Vergussmasse 67 ist am Orte miteinander fluchtender Flanschöffnungen 62, 86 ebenfalls vorhanden.

Die Rinne 62 weist Seitenwände 66, 66' und einen Rinnenboden 64 auf, die die Rinne 62 und die darin enthaltene Vergussmasse 67 begrenzen und Kräfte, die aus dem oberen Flansch 84 in die Vergussmasse 67 eingetragen werden, aufnehmen und an die Außenhülle 72 der Gerüststruktur weitergeben.

Zwischen den Außenwänden 66, 66' der Rinne 62 und dem oberen Flansch 84 ergeben sich in Umfangsrichtung Spalte 63, 63' mit einer Breite von jeweils einigen Millimetern, die mit Dichtungen 68, 68' abgedichtet sind. Hierbei handelt es sich vorzugsweise um austauschbare Gummiringe oder Gummistreifen, die insbesondere ihr Volumen nach der Verlegung ausdehnen können, die in den Spalt 63 eingequetscht sind und ein Eindringen von Feuchtigkeit und Salz in die Rinne 62 verhindern.

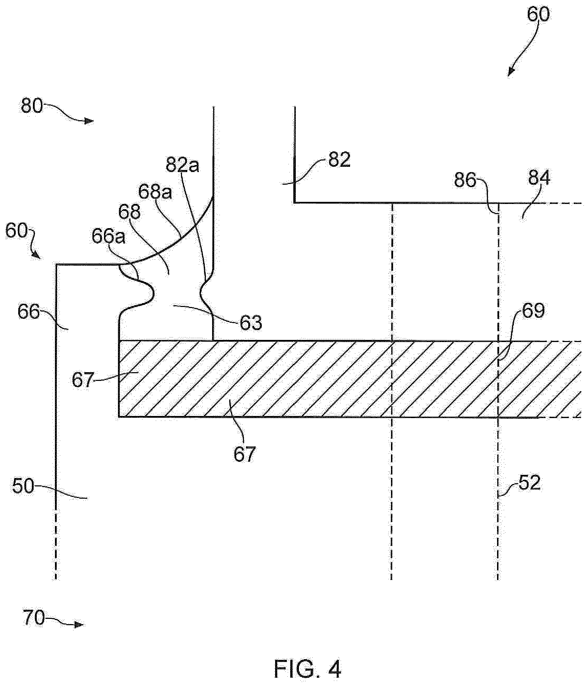

Eine Detaildarstellung im Querschnitt der Verbindungsstruktur 60 aus Fig. 3 ist in Fig. 4 in einer Variante dargestellt. Im Unterschied zu dem Ausführungsbeispiel gemäß Fig. 3 ist in Fig. 4 der Spalt 63 zwischen der Außenseite der Außenhülle 82 der Tragstruktur 80 und der Innenseite der Rinnenwand 66 mit einem teilweise verengten Querschnitt ausgeführt. Hierzu ragen eine Ausbuchtung 66a der Rinnenwand 66 von einer Seite und eine Ausbuchtung 82a der Außenhülle 82 von der gegenüberliegenden Seite in den Spalt 63 hinein und verengen ihn. In diesen Spalt 63 ist eine Dichtung 68 eingeführt, die durch die Ausbuchtungen 66a und 82a form- und kraftschlüssig festgehalten wird. Ferner weist die Dichtung 68 eine Ablauffläche 68a auf, die schräg von der Außenhülle 82 der Tragstruktur nach außen herunter verläuft und Wasser, also Regen- oder Meerwasser, nach außen hin ableitet. Zusätzlich kann die Oberseite der Rinnenwand 66 gegebenenfalls ebenfalls nach außen hin abgeschrägt sein, um Wasser und im Wasser mitschwimmende Schmutzpartikel nach außen abzuleiten. Anstelle der Ablauffläche 68a auf der Oberseite der Dichtung 68 kann auch eine eigene Ablauffläche (nicht dargestellt) vorgesehen sein, die die Dichtung und/oder den Spalt 63 überdeckt und gegebenenfalls mit einer Dichtlippe den Spalt 63 zwischen der Ablauffläche und der Oberseite des Flansches 50 abdichtet.

Die Dichtung 68 aus Fig. 4 kann im Profil schon mit einer Verengung vorgeformt sein, die etwas weniger stark ist wie die durch die Ausbuchtungen 66a, 82a gebildete Verengung des Spaltes 63. Dadurch ist es einfacher, die Dichtung 68 in den Spalt 63 einzuführen, und sie ist wegen der zusätzlichen Formkomplementarität im Spalt 63 gesichert.

Die eigentlichen Schraubenverbindungen, die aus jeweils einer durch die Flansch- und Durchgangsöffnungen 52, 69 und 86 gesteckten Schraube mit Gegenmutter bestehen, sind in den Figuren 3 und 4 der Übersichtlichkeit halber nicht dargestellt.

### Bezugszeichenliste

- 2: Meeresboden
- 4: Meer
- 6: Wasseroberfläche
- 10: Windenergieanlage
- 12: Rotorblatt
- 14: Maschinenhaus
- 16: Turm
- 18: Übergangsstück
- 20: Monopile
- 30: Jacket-Struktur
- 32: Eckrohr
- 34: rohrförmige Querstrebe
- 36: Verbindungspunkt
- 38: Fuß
- 50: Flansch
- 52: durchgängige Flanschöffnung
- 60: Verbindungsstruktur
- 62: Rinne
- 63, 63': Spalt
- 64: Rinnenboden
- 66, 66': Rinnenwand
- 66a: Ausbuchtung
- 67: Vergussmasse
- 67a: Füllhöhe
- 68, 68': Dichtung
- 68a: Ablauffläche
- 69: Durchgangsöffnung
- 70: Gründungsstruktur
- 72: Außenhülle
- 74: Außenseite
- 76: Innenseite
- 80: Tragstruktur
- 82: Außenhülle
- 82a: Ausbuchung
- 84: Flansch
- 86: durchgängige Flanschöffnung

## Patentansprüche

1. Verfahren zur Verbindung einer Gründungsstruktur (70) mit einer Tragstruktur (80) einer Windenergieanlage (10), wobei die Gründungsstruktur (70) einen an ihrer Oberseite angeordneten umlaufenden Flansch (50) aufweist, mit den Schritten:
- Positionieren und Befestigen der Gründungsstruktur (70) in oder auf einem Untergrund (2),
- Verfüllen einer umlaufenden Rinne (62) im umlaufenden Flansch (50) der Gründungsstruktur (70) mit einer selbstnivellierenden Vergussmasse (67) wenigstens bis zu einer Mindestvergusstiefe,
- Positionieren einer Tragstruktur (80) auf der Gründungsstruktur, wobei die Tragstruktur (80) mit einem unteren umlaufenden Flansch (84) in die Rinne (62) auf die ausgehärtete Vergussmasse (67) aufgesetzt wird,
- Befestigen der Tragstruktur (80) auf der Gründungsstruktur (70) mittels einer Flanschverbindung mit Verbindungselementen,
- Verspannen der Verbindungselemente, sodass die Vergussmasse (67) unter eine Vorspannung gesetzt wird,
**dadurch gekennzeichnet, dass** während oder nach Herstellen der Flanschverbindung zwischen Gründungsstruktur (70) und Tragstruktur (80) eine Dichtung (68) in einen oder in einem außen liegenden Spalt (63) zwischen einer Rinnen-Innenwand (66) und einer Außenhülle (82) der Tragstruktur (80) eingelegt und/oder positioniert wird.

2. Verfahren nach Anspruch 1, **dadurch gekennzeichnet, dass** als Vergussmasse (67) ein Gießharz verwendet wird.

3. Verfahren nach Anspruch 1 oder 2, **dadurch gekennzeichnet, dass** die Mindestvergusstiefe auch an einer durch eine Neigung oder Verformung des Flansches (50) bedingten flachsten Stelle des Rinnenbodens (64) wenigstens 20 mm, insbesondere wenigstens 30 mm, beträgt.

4. Verfahren nach einem der Ansprüche 1 bis 3, **dadurch gekennzeichnet, dass** durchgehende Flanschöffnungen (52) im umlaufenden Flansch (50) der Gründungsstruktur (70) mittels durch die Flanschöffnungen (52) gesteckter Füllkörper oder Hülsen, insbesondere in der Art von Süllwänden, vor einem Eindringen von Vergussmasse (67) in die Flanschöffnungen (52) geschützt werden, wobei insbesondere die Füllkörper oder Hülsen vor der Positionierung der Tragstruktur (80) auf dem Flansch (50) wieder entfernt werden.

5. Verfahren nach einem der Ansprüche 1 bis 4, **dadurch gekennzeichnet, dass** die Rinnen-Innenwand (66) und/oder die Außenhülle (82) der Tragstruktur (80) eine Form aufweisen, mittels der die Dichtung (68) form- und/oder kraftschlüssig festgehalten wird.

6. Verfahren nach einem der Ansprüche 1 bis 5, **dadurch gekennzeichnet, dass** es sich bei der Gründungsstruktur (80) um einen Monopile (20) handelt, der in einen Untergrund, insbesondere einen Meeresboden (2), eingerammt wird, wobei insbesondere auf einer äußeren Schalung gerammt wird, insbesondere auf einer äußeren Rinnenwand (66), oder um eine Jacket-Gründungsstruktur (30).

7. Verbindungstruktur (60) zur Verbindung einer Gründungsstruktur (70) mit einer Tragstruktur (80) einer Windenergieanlage (10) mittels einer Flanschverbindung, umfassend einen umlaufenden Flansch (50) an der Oberseite einer Gründungsstruktur (80), die in einem unteren Abschnitt in oder auf einem festen Untergrund (2) befestigbar oder befestigt ist, wobei der umlaufende Flansch (50) eine umlaufende Rinne (62) aufweist, die mit einer selbstnivellierenden Vergussmasse (67), insbesondere einem Gießharz, bis zu einer Mindestvergusstiefe verfüllbar oder verfüllt ist, **dadurch gekennzeichnet, dass** ein außen liegender Spalt (63) der Rinne (62) mittels einer Dichtung (68) abgedichtet ist.

8. Verbindungsstruktur (60) nach Anspruch 7, **dadurch gekennzeichnet, dass** die Verbindungsstruktur (60) weiter einen umlaufenden Flansch (84) an einer Unterseite einer Tragstruktur (80) der Windenergieanlage (10) umfasst, der auf die ausgehärtete Vergussmasse (67) in der Rinne (62) aufsetzbar oder aufgesetzt ist, wobei mittels Verbindungselementen eine vorgespannte Flanschverbindung zwischen der Tragstruktur (80) und der Gründungsstruktur (80) herstellbar oder hergestellt ist.

9. Verbindungsstruktur (60) nach Anspruch 7 oder 8, **dadurch gekennzeichnet, dass** die Rinne (62) eine Breite aufweist, die größer ist als die Breite des Flansches (84) der Tragstruktur (80).

10. Verbindungsstruktur (60) nach einem der Ansprüche 7 bis 9, **dadurch gekennzeichnet, dass** die Rinne (62) eine Tiefe aufweist, die auch bei einer Schiefstellung von bis zu 0,5°, insbesondere bis zu 1°, der Gründungsstruktur (80) einen Verguss der Vergussmasse (67) mit der Mindestvergusstiefe gewährleistet, wobei die Mindestvergusstiefe insbesondere 20 mm, insbesondere 30 mm, beträgt.

11. Verbindungsstruktur (60) nach einem der Ansprüche 7 bis 10, **dadurch gekennzeichnet, dass** der umlaufende Flansch (50) der Gründungsstruktur (70) im Querschnitt als nach innen oder außen überstehendes "L"-förmiges Profil oder als "T"-förmiges Profil ausgebildet ist.

12. Verbindungsstruktur (60) nach einem der Ansprüche 7 bis 11, **dadurch gekennzeichnet, dass** eine außen liegende Oberfläche der Dichtung (68) als schräge oder gekrümmte Ablauffläche (68a) ausgebildet ist oder eine schräge oder gekrümmte Ablauffläche, die den Spalt (63) überdeckt, an der Tragstruktur (80) ausgebildet ist.

13. Verbindungsstruktur (60) nach einem der Ansprüche 7 bis 12, **dadurch gekennzeichnet, dass** die Gründungsstruktur (70) ein Monopile (20) oder eine Jacket-Gründungsstruktur (30) ist, wobei die Tragstruktur (80) ein Übergangsstück (18), ein Turmsegment oder ein Turm (16) einer Windenergieanlage (10) ist.

14. Verbindungsstruktur (60) nach einem der Ansprüche 7 bis 13, **dadurch gekennzeichnet, dass** die Gründungsstruktur (70) ein Monopile (20) ist und über Kraftaufbringung auf eine äußere Rinnenwand (66) in den Untergrund (2) eingerammt wird.

15. Windenergieanlage (10) mit einer Gründungsstruktur (70), einer Tragstruktur (80) und einer Verbindungsstruktur (60) nach einem der Ansprüche 7 bis 13.

## Claims

1. A method of connecting a foundation structure (70) to a support structure (80) of a wind energy installation (10), wherein the foundation structure (70) comprises a circumferential flange (50) disposed on the upper side thereof, the method comprising the steps of:
- positioning and fixing the foundation structure (70) in or on a substrate (2),
- filling a circumferential channel (62) in the circumferential flange (50) of the foundation structure (70) with a self-levelling casting compound (67) at least up to a minimum casting depth,
- positioning a support structure (80) on the foundation structure, wherein the support structure (80) is placed on the hardened casting compound (67) such that a lower circumferential flange (84) is located in the channel (62),
- attaching the support structure (80) to the foundation structure (70) by means of a flange connection with connecting elements,
- tensioning the connecting elements so that the casting compound (67) is subjected to a prestress,
**characterised in that**, during or after the establishing of the flange connection between the foundation structure (70) and the support structure (80), a seal (68) is inserted and / or positioned into or in a gap (63) located outwardly between an inner wall of the channel (66) and an outer shell (82) of the support structure (80).

2. The method according to claim 1, **characterised in that** a casting resin is used as the casting compound (67).

3. The method according to claim 1 or 2, **characterised in that** the minimum casting depth, even at a shallowest point of the channel bottom (64) caused by an inclination or deformation of the flange (50), is at least 20 mm, in particular at least 30 mm.

4. The method according to any one of the claims 1 to 3, **characterised in that** pass-through flange openings (52) in the circumferential flange (50) of the foundation structure (70) are protected against penetration of the casting compound (67) into the flange openings (52) by means of packing bodies or sleeves inserted through the flange openings (52), in particular in the form of coaming walls, in particular wherein the packing bodies or sleeves are removed again before the support structure (80) is positioned on the flange (50).

5. The method according to any one of the claims 1 to 4, **characterised in that** the inner wall (66) of the channel and / or the outer shell (82) of the support structure (80) have a shape by means of which the seal (68) is held in a form fitting manner and / or in the form of a friction fit.

6. The method according to any one of the claims 1 to 5, **characterised in that** the foundation structure (80) is a monopile (20) which is driven into a substrate, in particular a seabed (2), wherein the driving is performed in particular on an outer formwork, in particular on an outer wall (66) of the channel, or around a jacket foundation structure (30).

7. A connecting structure (60) for connection of a foundation structure (70) to a support structure (80) of a wind energy installation (10) by means of a flange connection, comprising a circumferential flange (50) on the upper side of a foundation structure (80) which can be fastened or is fastened, at a lower portion, in or on a solid substrate (2), wherein the circumferential flange (50) comprises a circumferential channel (62) which can be filled or is filled with a self-levelling casting compound (67), in particular a casting resin, up to a minimum casting depth, **characterised in that** a gap (63) of the channel (62), which gap (63) is located outwardly, is sealed by means of a seal (68).

8. The connecting structure (60) according to claim 7, **characterised in that** the connecting structure (60) further comprises a circumferential flange (84) on a lower side of a support structure (80) of the wind energy installation (10), which circumferential flange (84) can be placed or is placed on the hardened casting compound (67) in the channel (62), wherein a prestressed flange connection between the support structure (80) and the foundation structure (80) can be established or is established by means of connecting elements.

9. The connecting structure (60) according to claim 7 or 8, **characterised in that** the channel (62) has a width which is greater than the width of the flange (84) of the support structure (80).

10. The connecting structure (60) according to any one of the claims 7 to 9, **characterised in that** the channel (62) has a depth which ensures that, even if the foundation structure (80) is in an oblique position of up to 0.5°, in particular up to 1°, the casting compound (67) is cast with the minimum casting depth, wherein the minimum casting depth is in particular 20 mm, in particular 30 mm.

11. The connecting structure (60) according to any one of the claims 7 to 10, **characterised in that** the circumferential flange (50) of the foundation structure (70) is constructed, in cross-section, as an inwardly or outwardly projecting "L"-shaped profile or as a "T"-shaped profile.

12. The connecting structure (60) according to any one of the claims 7 to 11, **characterised in that** a surface of the seal (68), which surface is located outwardly, is constructed as an inclined or curved run-off surface (68a), or that an inclined or curved run-off surface which covers the gap (63) is formed on the support structure (80).

13. The connecting structure (60) according to any one of the claims 7 to 12, **characterised in that** the foundation structure (70) is a monopile (20) or a jacket foundation structure (30), wherein the support structure (80) is a transition piece (18), a tower segment or a tower (16) of a wind energy installation (10).

14. The connecting structure (60) according to any one of the claims 7 to 13, **characterised in that** the foundation structure (70) is a monopile (20) and is driven into the substrate (2) via the application of a force to an outer wall (66) of the channel.

15. A wind energy installation (10) comprising a foundation structure (70), a support structure (80) and a connecting structure (60) according to any one of the claims 7 to 13.

## Revendications

1. Procédé de liaison d'une structure de fondation (70) à une structure porteuse (80) d'une éolienne (10), la structure de fondation (70) présentant une bride périphérique (50) disposée sur son sommet, comprenant les étapes consistant à :
- positionner et fixer la structure de fondation (70) dans ou sur un substrat (2)
- remplir une rigole périphérique (62) dans la bride périphérique (50) de la structure de fondation (70) avec une masse de scellement autonivelante (67) au moins jusqu'à une profondeur de scellement minimale,
- positionner une structure porteuse (80) sur la structure de fondation, la structure porteuse (80) avec un bride périphérique inférieure (84), étant placée dans la rigole (62) sur la masse de scellement durcie (67),
- fixer la structure porteuse (80) sur la structure de fondation (70) au moyen d'une liaison par bride avec des éléments de liaison,
- serrer les éléments de connexion, de sorte que la masse de scellement (67) soit placée sous précontrainte,
**caractérisé en ce que**, pendant ou après la réalisation de la liaison par bride entre la structure de fondation (70) et la structure porteuse (80), un joint (68) est inséré et/ou positionné entre une paroi intérieure (66) de la rigole et une enveloppe extérieure (82) de la structure porteuse (80).

2. Procédé selon la revendication 1, **caractérisé en ce que** la masse de scellement (67) utilisée est une résine de coulée.

3. Procédé selon la revendication 1 ou la revendication 2, **caractérisé en ce que** la profondeur de coulée minimale est d'au moins 20 mm, en particulier d'au moins 30 mm, même à l'endroit le plus plat du fond de rigole (64) dû à une inclinaison ou une déformation de la bride (50).

4. Procédé selon l'une quelconque des revendications 1 à 3, **caractérisé en ce que** des ouvertures traversantes (52) dans la bride périphérique (50) de la structure de fondation (70) sont protégées au moyen de matériaux de remplissage ou de manchons insérés dans les ouvertures de bride (52), en particulier comme des surbaux, contre la pénétration de masse de scellement (67) dans les ouvertures de bride (52), les matériaux de remplissage ou les manchons étant de nouveau retirés avant de positionner la structure porteuse (80) sur la bride (50).

5. Procédé selon l'une quelconque des revendications 1 à 4, **caractérisé en ce que** la paroi intérieure (66) de la rigole et/ou l'enveloppe extérieure (82) de la structure porteuse (80) ont une forme permettant de maintenir le joint (68) par complémentarité de forme et/ou solidement.

6. Procédé selon l'une quelconque des revendications 1 à 5, **caractérisé en ce que** la structure de fondation (80) est une monopile enfoncée par battage dans un substrat, en particulier dans le fond de la mer (2), le battage ayant lieu en particulier sur le coffrage extérieur, en particulier sur une paroi extérieure de la rigole (66), ou autour d'une structure de fondation en jaquette (30).

7. Structure de liaison (60) destinée à la liaison d'une structure de fondation (70) à une structure porteuse (80) d'une éolienne (10) au moyen d'une liaison par bride, comprenant une bride périphérique (50) sur le dessus d'une structure de fondation (80) pouvant être ou étant fixée, dans un tronçon inférieur, dans ou sur un substrat ferme (2), la bride périphérique (50) présentant une rigole périphérique (62) pouvant être ou étant comblée avec une masse de scellement autonivelante (67), en particulier une résine de coulée, jusqu'à une profondeur de coulée minimale, **caractérisée en ce qu'**une fente extérieure (63) de la rigole (62) est fermée hermétiquement par un joint (68).

8. Structure de liaison (60) selon la revendication 7, **caractérisée en ce qu'**elle (60) comprend en outre une bride périphérique (84) sur le dessous d'une structure porteuse (80) de l'éolienne (10), pouvant être ou étant placée sur la masse de scellement (67) durcie dans la rigole (62), des éléments de liaison pouvant permettre ou permettant une liaison par bride précontrainte entre la structure porteuse (80) et la structure de fondation (80).

9. Structure de liaison (60) selon la revendication 7 ou la revendication 8, **caractérisée en ce que** la rigole a une largeur supérieure à la largeur de la bride (84) de la structure porteuse (80).

10. Structure de liaison (60) selon l'une quelconque des revendications 7 à 9, **caractérisée en ce que** la rigole (62) a une profondeur qui garantit, même si la structure de fondation (80) est de travers de 0,5° maximum, en particulier de 1° maximum, la coulée d'une masse de scellement (67) ayant la profondeur de scellement minimale, la profondeur de scellement minimale étant en particulier de 20 mm, en particulier de 30 mm.

11. Structure de liaison (60) selon l'une quelconque des revendications 7 à 10, **caractérisée en ce que** la section de la bride périphérique (50) de la structure de fondation (70) est en forme de profil en "L" dépassant vers l'intérieur ou vers l'extérieur ou de profil en "T".

12. Structure de liaison (60) selon l'une quelconque des revendications 7 à 11, **caractérisée en ce qu'**une surface extérieure du joint (68) est conçue comme une surface d'écoulement (68a) en biseau ou courbe ou une surface d'écoulement en biseau ou courbe, qui recouvre la fente (63), est aménagée sur la structure porteuse (80).

13. Structure de liaison (60) selon l'une quelconque des revendications 7 à 12, **caractérisée en ce que** la structure de fondation (70) est une monopile (20) ou une structure de fondation en jaquette (30), la structure porteuse (80) étant une pièce de transition (18), un segment de tour ou une tour (16) d'une éolienne (10).

14. Structure de liaison (60) selon l'une quelconque des revendications 7 à 13, **caractérisée en ce que** la structure de fondation (70) est une monopile (20) et enfoncée par battage dans le substrat (2) par l'application de force sur une paroi de rigole extérieure (66).

15. Eolienne (10) dotée d'une structure de fondation (70), d'une structure porteuse (80) et d'une structure de liaison (60) selon l'une quelconque des revendications 7 à 13.
